Europäisches Patentamt

European Patent Office

Office européen des brevets

(19)

(11) Publication number: **0 439 901 A1**

## EUROPEAN PATENT APPLICATION

(21) Application number: 90310321.6

(22) Date of filing: 20.09.90

(51) Int. Cl.⁵: **B01D 27/10**, B01D 36/00

(30) Priority: 01.02.90 JP 8132/90

(43) Date of publication of application:
07.08.91 Bulletin 91/32

(84) Designated Contracting States:
DE FR GB

(71) Applicant: **Mitsubishi Oil Company, Limited**
no. 2-4, Toranomon 1-chome
Minato-ku Tokyo(JP)

(72) Inventor: **Yano, Hisashi**
1019-233, Aza Araisawa, Kuden-cho
Sakae-ku, Yokohama-shi, Kanagawa(JP)

Inventor: **Yabumoto, Junsuke**
48-8, Nakaechi
Atsugi-shi, Kanahawa(JP)
Inventor: **Kitada, Akiharu**
6-1, Shimo-shinjo 3-chome
Nakahara-ku, Kawasaki-shi, Kanagawa(JP)
Inventor: **Kuwavara, Ryuzi**
35-1, Matsumi-cho, 1-chome
Kanagawa-ku, Yokohama-shi, Kanagawa(JP)

(74) Representative: **Abbie, Andrew Kenneth et al**
R.G.C. Jenkins & Co. 26 Caxton Street
London SW1H 0RJ(GB)

(54) **Oil filter.**

(57) An oil filter is disclosed which has an improved relief valve assembly permitting the oil to flow out of the filter without contacting a filter element. It comprises a housing opened at one end thereof, a base plate fixed to the housing at its open end, a separator unit disposed in the housing for removing solid contaminants from the oil, and the relief valve assembly arranged to operate for providing a bypass passage for the oil when the separator unit is clogged. The base plate has formed therein an aperture which allows the oil to flow into the housing, a central opening forming an outlet of the oil, and a circular wall defining the central opening and arranged to be used for attaching the housing to a mount in an oil lubricating system. The separator unit is in the form of a hollow cylinder and defines a central space. The relief valve assembly comprises a support member fitted on the outer surface of the circular wall to sealingly support a bottom of the separator unit adjacent the base plate, a hole formed through the support member to open into the central space within the separator unit, and a valve member disposed in the central space and arranged to normally close the hole.

FIG. 2

## OIL FILTER

### BACKGROUND OF THE INVENTION

#### 1. Field of the Invention

The present invention generally relates to an oil filter to be incorporated in a lubricating system for an internal combustion engine or the like and, more particularly, to an improvement in a relief valve which is adapted to operate for providing a bypass passage of the oil when a filter element is clogged.

#### 2. Description of the Prior Art

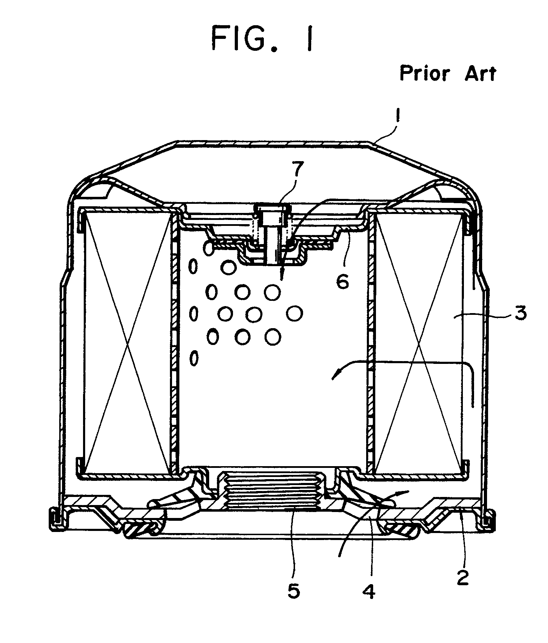

As is well known in the art, an oil filter of the above type is used to remove solid contaminants that may be mingled into the oil during a circulation thereof, by means of a filter element typically formed of a pleated sheet. During a long period of use the filter element sometimes is clogged with the solid contaminants that are accumulated on the outer surface of the filter element, preventing the oil to flow therethrough for circulation. In order to ensure that the oil can properly be supplied to the engine even when the element is clogged, a relief valve has hitherto been provided as illustrated in FIG. 1 which shows a prior art oil filter with the relief valve.

The oil filter of FIG. 1 includes a cylindrical housing 1 having a lower open end which is closed by a base plate 2 in a liquid-tight manner. A filter element 3 is disposed in the housing 1 to define a central space within the element 3 so that an oil, which is introduced into the housing 1 through apertures 4 formed in the base plate 2, normally passes through the element 3 from outside to inside as shown by an arrow. The oil filtered by the element 3 then flows out of the housing 1 through a central opening 5 in the base plate 2 and is supplied to the engine for lubrication. An upper end plate 6 attached to the element 3 extends radially inwardly to support a relief valve 7 which is normally closed by spring means. When the element 3 is clogged and consequently a pressure of oil in the housing 1 exceeds a predetermined value, the relief valve 7 opens to provide a bypass passage in the upper end plate 6, allowing the oil to flow into the central space therefrom. Therefore, the oil, though not filtered, can be supplied to the engine so as to avoid a seizure thereof due to the starvation oil.

When the relief valve 7 operates to open the bypass passage, the oil from the apertures 4 flows in a circumferential space defined between the outer surface of element 3 and the inner wall of housing 1 and into an upper chamber confined above the end plate 6. During such a flow, however, the oil contacts the outer surface of the element 3 and scrapes solid contaminants such as metal dust which have previously been accumulated thereon. The scraped contaminants are mingled with the oil and carried thereby to the engine through the bypass passage at the valve 7, adversely affecting the lubrication of engine. That is, in the prior art oil filter once the relief valve operates, not only the oil is no longer filtered but the oil is further contaminated by the contact with the outer surface of the filter element. Additionally, since the circumferential space is usually narrow, particularly at the upper end portion thereof where a flange of the end plate extends in the space, a pressure loss of the oil flow becomes large which requires a powerful pump in the oil lubricating system.

### SUMMARY OF THE INVENTION

Accordingly, an object of the invention is to provide an oil filter with a relief valve assembly which may provide, when operating, a bypass passage permitting an oil to flow out of a housing without contacting an outer surface of filter element.

Another object of the invention is to provide an oil filter having a relief valve assembly which can minimize a pressure loss of the oil flow through a bypass passage.

According to the present invention, an oil filter comprises a housing opened at one end thereof, a base plate fixed to the housing at its open end, a separator unit disposed in the housing for removing solid contaminants from the oil, and a relief valve assembly adapted to operate for providing a bypass passage for the oil when the separator unit is clogged. The base plate has formed therein an aperture which allows the oil to flow into the housing, a central opening forming an outlet of the oil, and a circular wall defining the central opening and adapted to be used for attaching the housing to a mount in an oil lubricating system. The separator unit is in the form of a hollow cylinder and defines a central space. The relief valve assembly comprises a support member fitted on the outer surface of the circular wall to sealingly support a bottom of the separator unit adjacent the base plate, a hole formed through the support member to open into the central space within the separator unit, and a valve means disposed in the central space and adapted to normally close the hole.

In one embodiment of the invention, the valve means includes a valve fitted around the outer surface of the circular wall and a compression spring for urging the valve to the support member. The valve may comprise an elastic ring facing the support member and a cylindrical receive having a flange for receiving a force of the compression spring.

Other objects, features and advantages of the invention will be apparent from the following description of the preferred embodiments thereof when taken in conjunction with the accompanying drawings.

BRIEF DESCRIPTION OF THE DRAWINGS

FIG. 1 is a longitudinally sectioned elevational view illustrating a prior art oil filter incorporating a relief valve;

FIG. 2 is a longitudinally sectioned elevational view illustrating an oil filter with a relief valve assembly according to an embodiment of the invention;

FIG.3 is a fragmentary view showing another example of valve means; and

FIG.4 is a longitudinally sectioned elevational view illustrating an oil filter with a relief valve assmebly according to another embodiment of the invention.

DESCRIPTION OF THE PREFERRED EMBODIMENTS

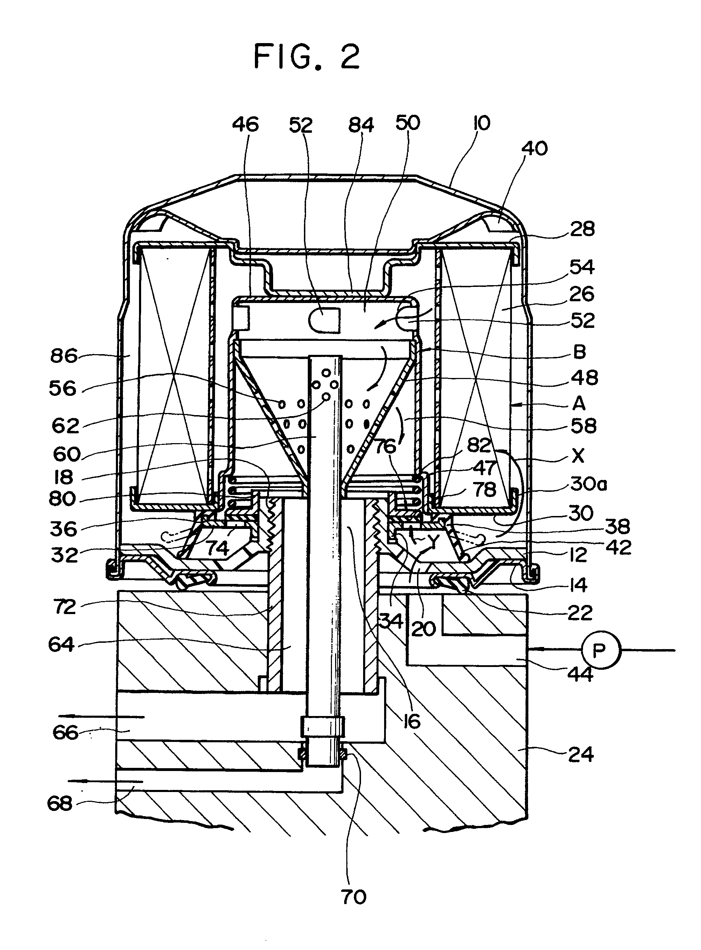

Referring to FIG. 2 of the drawings there is illustrated an oil filter according to a preferred embodiment of the invention and incorporating two separator units, one for removing solid contaminants and the other for gaseous contaminants, the arrangement being disclosed in U. S. Patents No. 4,878,924 and No. 4,865,632 owned by Mitsubishi Oil Co., Ltd.. It is, however, to be noted that an application of the invention is not limited to the oil filter having dual separators but it may also be applied to oil filters of conventional type comprising a single separator for solid contaminants, as described later.

As shown in FIG. 2, the oil filter has a housing 10 of substantially cylindrical shape having a lower open end and an upper closed end. A base plate or disk 12 is secured to an inner peripheral surface of the housing 10 at a position near its lower end and is fixedly supported by means of a ring member 14 of which outer edge is seamed with the lower edge of the housing 10. The base plate 12 is formed with a central opening defined by an upwardly projecting circular wall 18 which has a threaded inner surface. A plurality of apertures 20 are provided in the base plate 12 radially outward of the opening 16, at angular intervals along the circumferential direction and are surrounded by a ring-shaped gasket 22 that seals a space between the base plate 12 and an upper surface of a mount block 24 to which the housing 10 is attached.

Arranged within the housing 10 are a separator unit A for separating solid contaminants from an oil circulating in a lubricating system of a machine, and a separator unit B for separating geseous contaminants in the oil. The separator unit A is of usual type and comprises a filter element 26, an upper end plate 28 and a lower end plate 30 both fixed to the element 26. The filter element 26 has a hollow cylindrical shape and is typically formed of a pleated sheet. The upper end plate 28 extends over an entire diameter of the unit A, while the lower end plate 30 is of doughnut-shape having upwardly projected side flanges 30a. A support member 32 is fixedly secured at its inner vertical portion 34 to the outer surface of circular wall 18 and extends radially outward to support the lower end plate 30 through a resilient seal 38 formed of rubber or other suitable material. The seal 38 is fastened to the support member 32 by a projection 36 that is formed at the outer periphery of support member 32. As described later, this support member also constitutes a valve seat for a relief valve assembly. A spring 40 is compressed between the upper end of the housing 10 and the upper end plate 28 to urge the unit A against the seal 38, thereby holding the unit A in position. An intimate contact between the lower end plate 30 and the resilient seal 38 separates an inner central space defined within the unit A from an outer peripheral space 86 of the housing 10 in a liquid-tight manner. The seal 38 has a swingable lower extension 42 forming a check valve for preventing a reverse flow of the oil from the housing into an inlet passage 44 that is formed in the mount block 24 and communicates with the aperture 20 in the base plate 12.

The separator unit B is disposed at the center of the housing 10 and includes a cylindrical casing 46 of which lower end is fixed to the inner flange 30a of the end plate 30. A funnel-shaped member or cyclone 48 is housed within the casing 46 and is attached at its upper vertical portion to the peripheral surface of the casing 46, defining together with a bottom wall of the casing 46 a chamber 50 which is adapted to create a vortical flow of the oil as described hereinafter. Formed through the peripheral wall of the casing 46 at a position above the cyclone 48 are inlets 52 for introducing the oil into the chamber 50. Each inlet 52 is formed by punch press with providing a guide wall or deflector 54 extending inwardly relative to a tangent of the casing 46 at the inlet 52 so that the oil introduced therethrough flows in a vortical pattern. A plurality of pores 56 are formed through the lower wall of the cyclone 48 to connect the chamber 50 with a space 58 which is defined between the cyclone 48 and the casing 46 and communicates with the central opening 16. A removal pipe 60 having an upper closed end extends in the opening 16 and projects into the cyclone 48. The lower vertical portion of cyclone 48 is fixed to the pipe 60 to orient the latter symmetrically along the axial center of the chamber 50. The upper portion of pipe 60 in the chamber 48 is formed with small orifices 62 through which a gas-rich oil flows into the pipe 60 as described later.

The mount block 24 has a central hole 64 which is aligned with the opening 16 and communicates with a first outlet passage 66 formed in the block 24. The removal pipe 60 extends through the central hole 64 and in the first outlet passage 66, and its lower end opens into a second outlet passage 68 that is also formed in the block 24 below the first passage 66. A suitable seal such as 70 is provided around the pipe 60 to separate the first and second passages from each other. The first passage 66 is connected to, for example, an engine (not shown) to be lubricated while the second passage 68 is connected to, for example, an oil pan (not shown) for storing the oil. Fitted in the central hole 64 is a sleeve 72 which extends into the opening 16 to threadedly engage with the wall 18 of the base plate 12, thereby attaching the housing 10 to the block 24.

The relief valve assembly includes the valve seat having plural holes 74 extending therethrough, the valve seat being formed at the horizontal portion of support member 32. Mobably lying on the valve seat is a ring-shaped valve 76 which is fitted around the circular wall 18 and has a dimension sufficient to close the holes 74. This valve 76 comprises an elastic ring 78 adapted to come in close contact with the upper surface of the valve seat surrounding the hole 74, and a cylindrical receive 80 fixed to the ring 78 and having a radial flange which receives a downward force from a compression spring 82 to normally close the hole 74. The upper end of the spring 82 abuts against a shoulder 47 formed by enlarging the lower end portion of the casing 46. In order to ensure the positioning of casing 46 against the compression spring 82, the upper end plate 28 has a central depression 84 which is in contact with the bottom of casing 46.

When the oil is supplied by a pump P via the inlet passage 44, it flows into the oil filter through the aperture 20. In normal conditions where the filter element 26 of unit A permits a smooth flow of the oil therethrough, the oil flow pushes the check valve 42 to a position indicated by dotted line and enters into the outer peripheral space 86 of the housing 10 to pass through the filter element 26 from outside to inside, as shown by an arrow X. The filtered oil flows in the space between the element 26 and casing 46 and is then introduced into the chamber 50 through the inlets 52 which, together with the deflectors 54, contribute to the creation of vortical flow. The oil blows downward in the chamber 50 with the vortical pattern, generating centrifugal force which acts on the oil. Due to a difference in density, the oil containing geseous contaminants, i.e. gas-rich oil, is separated and gathers near the axial center of the flow where it is introduced through the orifices 62 into the removal pipe 60 for discharge into the oil pan via the second outlet passage 68. The remaining oil, which contains little gaseous contaminants, flows around the wall of cyclone 48 and passes through the pores 56 into the space 58 for circulation in the lubricating system via the central opening 16, hole 64 and the first outlet passage 66.

On the other hand, if a flow resistance at the filter element 26 is increased due to a clogging thereof and exceeds a predetermined value that is set by the force of spring 82, the pressure of oil raises the valve 76 against the spring force to open the hole 74 in the valve seat. Therefore, the oil pumped into the housing 10 flows directly into the space 58 in the casing 46 through the hole 74 (arrow Y) and is all introduced into the first passage 66 via the central hole 64, thus providing a bypass passage in the sense that the oil bypasses the separator units A and B without flowing into the outer peripheral space 86 of the housing 10 and without contacting the filter element 26. In the illustrated embodiment, the valve 76 also opens when the pores 56 of cyclone 48 are clogged by solid contaminants in the oil. Such a clogging may be caused by incomplete sealing between the element 26 and end plates 28, 30 or by a partial breakage of the element 26, which allows unfiltered oil to flow into the chamber 50.

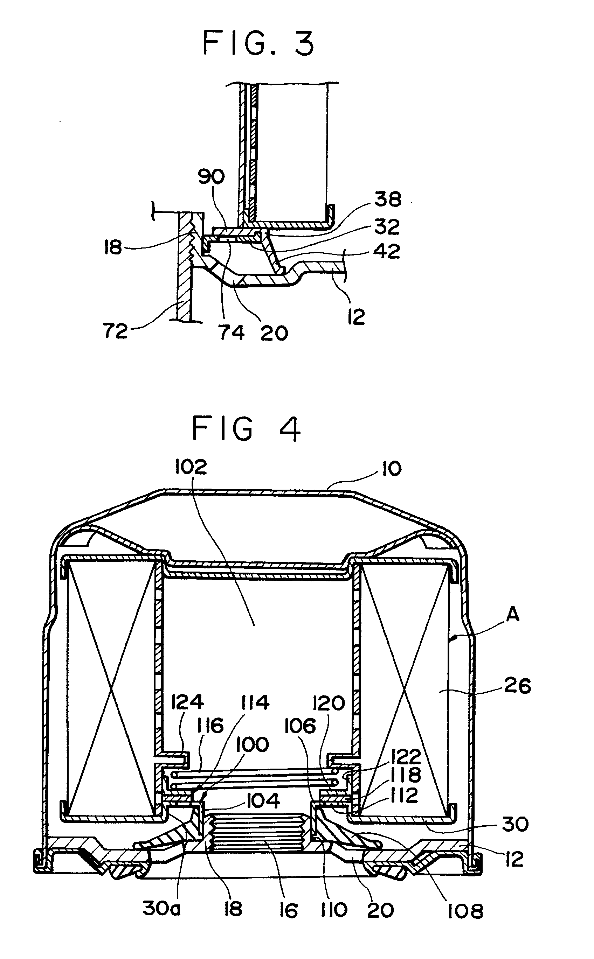

It should be noted that the relief valve assembly of the invention is not limited to the above structures. For example, the valve 76 and spring 82 may be replaced by providing an inner extension 90 of the resilient seal 38 extending to lie on the valve seat 32 beyond the hole 74, as shown in FIG 3. In this case, the projection 36 locates substantially at the center of the seal 38. The inner extension 90 must be thicker than the lower extension forming check valve 42 in order to ensure that the oil flow normally deforms only the check valve 42 and the inner extension 90 will not deform to open the hole 74 until a pressure of oil exceeds a predetermined value set by a thickness of the inner extension 90.

Another embodiment of the invention illustrated in FIG.4 is different from the above oil filter in that it has only the separator unit A for removing solid contaminants, as widely used in the oil lubricating system for engine. In this embodiment, the lower end plate 30 has fromed integrally therewith an inner portion 100 extending between the inner flange 30a and the circular wall 18 to sealingly define an inner central space 102 within the sparator unit A. The inner portion 100 comprises a cylindrical section 104 tightly fitted on the outer surface of the wall 18 and a horizontal section 106 extending radially from the cylindrical section 104 to the flange 30a. A check valve 108 is provided around the apertures 20 to prevent a reverse flow of the oil and is attached at its inner end to the cylindrical section 104, with a protrusion 110 being fitted between the lower end of section 104 and the base plate 12 for providing a further seal.

A relief valve assembly has structures similar to those shown in FIG.2 and comprises holes 112 extending through the horizontal section 106 which forms a valve seat, a ring-shaped valve 114 lying on the valve seat to close the holes 112 and a compression spring 116 urging the valve 114 toward the valve seat. The valve 114 includes an elastic ring 118 addapted to come in close contact with the upper suface of the valve seat surrounding the holes 112, and a receive 120 having a cylindrical flange 122 which is slidably fitted within the unit A in contact with the inner vertical wall thereof. The elasitc ring 118 and receive 120 are bonded together so that the spring force transmitted to the receive 120 acts upon the ring 118 to normally close the holes 112. The upper ends of the spring 116 abuts against a radial projection 124 extending inwardly from the inner vertical wall of the unit A.

As in the above embodiment, the oil introduced into the housing 10 from the apertures 20 is normally filtered by passing through the element 26 and flows into the central space 102, it being discharged via the central opening 16. When the element 26 is clogged and a pressure of oil flow prevails over the force of spring 116, the valve 114 rises against the spring 116 to open the holes 112. Therefore, the oil flows through the holes 112 directly into the central space 102, thus bypassing the separator unit A.

As decsribed above, the oil filter according to the invention permits the oil to bypass the filter element and directly enter into the central space of the housing through the hole formed adjacent the aperture through which the oil flows into the housing, when the element is clogged. The arrangement of the relief valve assembly prevents, when operating, the oil from contacting the clogged filter element and thus scraping and being mixed with the solid contaminants which have been adhered to the outer surface of filter element and which would otherwise affect the engine adversely. Further, since the bypass by the relief valve assembly does not include a narrow passage between the housing and filter element, which passage has been a part of the bypass in prior art oil filter, a pressure loss of oil flow may be minimized.

Although the present invention has been described with reference to the preferred embodiment thereof, many modifications and alterations may be made within the spirits of the invention.

**Claims**

1. An oil filter comprising:
   a housing opened at one end thereof;
   a base plate fixed to said housing at the open end thereof, said base plate having formed therein an aperture allowing the oil to flow into said housing, a central opening forming an outlet of the oil and a circular wall defining said central opening, said circular wall being adapted to be used for attaching said housing to a mount in an oil lubricating system;
   a hollow cylindrical separator unit disposed in said housing for removing solid contaminants from the oil, said separator unit defining a central space; and
   a relief valve assembly adapted to operate for providing a bypass passage for the oil when said separator unit is clogged, said relief valve assembly comprising a support member fitted on the outer surface of said circular wall to sealingly support a bottom of said separator unit adjacent said base plate, a hole formed through said support member to open into said central space within said separator unit, and a valve means disposed in said central space and adapted to normally close said hole.

2. An oil filter as claimed in claim 1, wherein said valve means includes a valve fitted around the outer surface of said circular wall and a compression spring for urging said valve to said support member.

3. An oil filter as claimed in claim 2, wherein said valve comprises an elastic ring facing said support member and a cylindrical receive having a flange for receiving a force of said compression spring.

4. An oil filter as claimed in claim 1, further comprising a resilient seal fitted between an outer peripheral end of said support member and the bottom of said separator unit for providing a liquid tight seal therebetween.

5. An oil filter as claimed in claim 4, wherein said support member has formed at the outer peripheral end thereof a projection to secure said resilient seal in position.

6. An oil filter as claimed in claim 4, wherein said resilient seal includes a deformable lower extension extending to said base plate, said lower extension forming a check valve for preventing a backflow of the oil.

7. An oil filter as claimed in claim 6, wherein said resilient seal further includes a deformable inner extension extending to lie on said support member beyond said hole and having a thickness larger than a thickness of said lower extension, and wherein said valve means comprises said inner extension.

8. An oil filter as claimed in claim 2, further comprising a second separator unit adapted to remove gaseous contaminants from the oil that has passed through said separator unit, said second separator unit being disposed in said central space within said separator unit.

9. An oil filter as claimed in claim 8, wherein said second separator unit includes a cylindrical casing having an open end adjacent said support member, the side wall of said casing being enlarged at the lower end portion thereof to form a shoulder, and wherein the upper end of said compression spring abuts against said shoulder.

10. An oil filter as claimed in claim 9, wherein said second separator unit further includes a funnel-shaped cyclon disposed within said casing and a space defined between said casing and said cyclone to communicate with said central opening in said base plate, and wherein said hole in said support member opens into said space.

11. An oil filter as claimed in claim 2, wherein said separator unit has a radial projection extending inwardly from the inner wall thereof, and wherein the upper end of said compression spring abuts against said radial projection.

12. An oil filter comprising:
a housing opened at one end thereof;
a base plate fixed to said housing at the open end thereof, said base plate having formed therein an aperture allowing the oil to flow into said housing, a central opening forming an outlet of the oil and a circular wall defining said central opening, said circular wall being adapted to be used for attaching said housing to a mount in an oil lubricating system;
a cylindrical first separator unit disposed in said housing for removing solid contaminants from the oil;

a second separator unit disposed inside of said first separator unit for removing gaseous contaminants from the oil that has passed through said first separator unit, said second separator unit including a cylindrical casing having an open end facing said base plate, a funnel-shaped cyclone secured within said casing and a space defined between said casing and said cyclone to communicate with said central opening; and
a relief valve assembly adapted to operate for providing a bypass passage for the oil when at least one of said first and second separator units is clogged, said relief valve assembly comprising a support member fitted on the outer surface of said circular wall to sealingly support a bottom of said first separator unit adjacent said base plate, a hole formed through said support member to open into said space in said second separator unit, and a valve means disposed in said space and adapted to normally close said hole.

13. An oil filter as claimed in claim 12, wherein said valve means includes a valve fitted around the outer surface of said circular wall and a compression spring for urging said valve to said support member.

14. An oil filter as claimed in claim 13, wherein the side wall of said casing is enlarged at the lower end portion thereof to form a shoulder, and whrein the upper end of said compression spring abuts against said shoulder.

15. An oil filter comprising:
a housing opened at one end thereof;
a base plate fixed to said housing at the open end thereof, said base plate having formed therein an aperture allowing the oil to flow into said housing, a central opening forming an outlet of the oil and a circular wall defining said central opening, said circular wall being adapted to be used for attaching said housing to a mount in an oil lubricating system;
a hollow cylindrical separator unit disposed in said housing for removing solid contaminants from the oil, said separator unit defining a central space; and
a relief valve assembly comprising a support member fitted on the outer surface of said circular wall to sealingly support a bottom of said separator unit adjacent said base plate, a hole formed through said support member to open into said central space within said separator unit, and a valve means disposed in said central space and adapted to normally close said hole, said valve means being also adapted to open said hole when said separator unit is clogged to thereby provide a bypass passage permitting the oil to flow into said central space without contacting the outer surface of said separator unit.

16. An oil filter comprising a housing having an inlet means and an outlet means for allowing the flow of oil into and out of said housing, mounting means for mounting a filter element in said housing such that flow from said inlet means to said outlet means is normally through said filter element, and flow bypass means for directing flow from said inlet means upstream of said filter element, when mounted on said mounting means, to said outlet means when the pressure in said housing upstream of said flow bypass means exceeds a predetermined value.

17. An oil filter as claimed in claim 16, further comprising a separator for removing gaseous contaminants disposed downstream of said mounting means and upstream of said outlet means, said flow bypass means directing flow downstream of the separator to said outlet means when said pressure in said housing upstream of said flow bypass means exceeds said predetermined value.

# FIG. I

**Prior Art**

FIG. 2

# FIG. 3

# FIG 4

European
Patent Office

**EUROPEAN SEARCH
REPORT**

Application Number

**EP 90 31 0321**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 567 022 (D.I. THORNTON WARWICK et al.) <br> * Column 1, lines 61-75; column 2, lines 1-45 * | 1,2,5,6, 13,14,15, 16 | B 01 <br> D 27/10 <br> B 01 D 36/00 |
| X | US-A-3 473 664 (W.H. HULTGREN) <br> * Column 2, lines 63-72; column 3, lines 1-75; column 4, lines 1-50 * | 1,2,3,4, 12,15,16 | |
| X | US-A-3 640 390 (T.J. GOY et al.) <br> * Column 2, lines 60-75; column 3, lines 1-51 * | 1,2,12,15, 16 | |
| X | US-A-3 618 775 (W.H. HULTGREN) <br> * Column 1, lines 30-70; column 2, lines 1-20 * | 1,2,12,15, 16 | |
| X | GB-A-2 056 873 (AUTOMOTIVE PRODUCTS) <br> * Page 2, lines 5-42 * | 1,15,16 | |
| X,D | US-A-4 865 632 (HISASHI YANO et al.) <br> * Column 2, lines 25-56 * | 8,9,10 | |
| A,D | US-A-4 878 924 (HISASHI YANO et al.) <br> * Column 2, lines 19-51 * | 8,9,10 | TECHNICAL FIELDS SEARCHED (Int. Cl.5) <br><br> B 01 D <br> F 01 M |

The present search report has been drawn up for all claims

| Place of search | Date of completion of search | Examiner |
|---|---|---|
| The Hague | 21 February 91 | KERRES P.M.G. |